# EUROPEAN PATENT APPLICATION

(11) **EP 4 512 712 A1**
(43) Date of publication of application: **26.02.2025**
(21) Application number: 24196069.9
(22) Date of filing: 23.08.2024
(51) Int. Cl.: B64C 3/00, B64C 3/18, B64C 3/26, B64C 3/14, B64C 3/24

(54) **AIRCRAFT WING STRUCTURE**

(30) Priority: 25.08.2023 GB 202313031
(71) Applicant: Airbus Operations Limited, Bristol BS34 7PA (GB)
(72) Inventor: HEAYSMAN, Chris, Bristol, BS34 7BD (GB); GAITONDE, John Martin, Bristol, BS34 7PA (GB); RANKIN, Aimee, Bristol, BS34 7PA (GB)
(74) Representative: EIP

(57) **Abstract**

Disclosed is an aircraft wing including a skin and a framework for supporting the skin. The framework comprises a spar extending along a length of the wing, the length extending between a root end and a tip end of the wing, a plurality of ribs extending chordwise between a leading edge of the wing and a trailing edge of the wing; and a plurality of stringers attached to the skin. The plurality of stringers comprises a first stringer extending along the length of the wing, wherein a proximal end of the first stringer is arranged nearer the root end and a distal end of the stringer is arranged nearer the tip end; and an auxiliary stringer extending non-parallel with the first stringer and arranged such that a portion of the auxiliary stringer is proximal to the distal end of the first stringer.

## Description

### TECHNICAL FIELD

The present invention relates to structural components for aircraft, and in particular for aircraft wings.

### BACKGROUND

An aircraft wing must have a structural rigidity suitable to withstand the severe demands of the operating conditions of the aircraft, such as the lift forces on the wing. Buckling of the wing skin or wing structural supports can limit the mechanical performance of the wing. It is desirable to provide an improved wing structure which can sustain higher loads with reduced structure mass.

### SUMMARY

A first aspect of the present invention provides an aircraft wing. The aircraft wing comprises a skin, and a framework for supporting the skin. The framework comprises a spar extending a long a length of the wing, the length extending between a root end and a tip end of the wing; a plurality of ribs extending chordwise between a leading edge of the wing and a trailing edge of the wing; and a plurality of stringers attached to the skin. The plurality of stringers comprises a first stringer and an auxiliary stringer. The first stringer extends along the length of the wing, and a proximal end of the first stringer is arranged nearer the root end and a distal end of the stringer is arranged nearer the tip end. The auxiliary stringer extends non-parallel with the first stringer and is arranged such that a portion of the auxiliary stringer is proximal to the distal end of the first stringer.

Generally, stringers are reinforcing structures that help to distribute loads across the skin and improve the mechanical performance of the wing especially in terms of structural instability failure modes. Unsupported areas of the skin, that is, portions of the skin arranged between neighbouring stringers, may be particularly vulnerable to buckling. The present invention is based on the realisation that buckling of the skin of a certain portion of the aircraft wing can be reduced by reducing the size of unsupported skin areas of that portion. The inventors have realised that in typical aircraft wings, skin near the distal end of the first stringer can have poorer mechanical performance in its load-bearing capabilities, as the termination of the first stringer may result in a relatively large unsupported skin area. Relatively large unsupported regions of the wing skin can buckle at lower loads than other, better supported skin areas which are present in parts of the wing away from the distal end of stringers, for example. The lower mechanical performance of the relatively large unsupported regions can impose an overall performance limit on the wing, and can necessitate an overall heavier structure in order to achieve sufficient load-bearing mechanical performance. The auxiliary stringer, being non-parallel to the first stringer and arranged proximal to the distal end of the first stringer, can thereby act to support unsupported portions of the skin, such that the tendency for skin buckling is suppressed. By suppressing buckling, the aircraft wing can withstand increased loads, for example, or can be reduced in weight to withstand a specific threshold load when compared with existing wings.

Optionally, the distal end of the first stringer is connected to the auxiliary stringer at a joint. Connecting the distal end of the first stringer to the auxiliary stringer can help distribute loads through the framework, and can remove or decrease the transfer of loads between stringers through the skin. Transfer of loads between stringers through the skin typically requires a more complex and less structurally efficient design. Connecting the distal end of the first stringer to the auxiliary stringer thereby improves mechanical performance of the skin and the wing, which can sustain higher loads with reduced structural mass.

Optionally, the auxiliary stringer comprises a stack of carbon fibre reinforced polymer plies, and the first stringer is formed from a first ply of the stack of plies. For example, the ply can extend between, overlie or be otherwise integrated, such as by interleaving, into the first stringer from the auxiliary stringer, to improve the physical coupling of the first stringer with the auxiliary stringer. This can mean that loads are more readily transferred through the framework of the wing.

Optionally, the wing further comprises a capping element configured to at least partially house a portion of the first stringer, auxiliary stringer, and the joint. This can further improve the load bearing properties of the joint, and can help reinforce the joint, for example.

Optionally, the trailing edge of the wing is non-parallel with the leading edge of the wing. Such a wing can be considered to have a tapered topology as the separation between the trailing edge of the wing and the leading edge of the wing decreases from the root and to the tip end. In typical aircraft wings with such a tapered topology, stringers running parallel to the length of the wing may terminate at midway along the wing, relative to the length of the wing, rather than extending along the full length of the wing, as said stringers are limited in their extent by one of the non-parallel leading or trailing edge. That is, the non-parallel leading or trailing edge may effectively intersect the path of the stringer. The tapered topology can therefore, in typical aircraft wings, increase the non-uniformity of support of the skin due to the plurality of stringers. The auxiliary stringer, which extends non-parallel to the first stringer, can be straightforwardly implemented into such a tapered topology to enhance the support of the skin. The non-parallel alignment of the auxiliary stringer to the first stringer means the auxiliary stringer can be provided without impacting the overall design of the wing, for example.

Optionally, the auxiliary stringer extends alongside the trailing edge of the wing or the leading edge of the wing, referred to herein as a "tracked edge" for convenience. In typical aircraft wings, the skin near the trailing edge or the leading can be particularly vulnerable to buckling effects as stringers typically terminate near these regions as opposed to a relatively central position of the aircraft wing, which means the skin near the trailing edge or leading edge can have relatively large unsupported regions. The auxiliary stringer, in extending alongside the tracked edge, conforms to the overall topology of the wing and reinforces areas of the skin near the tracked edge to suppress buckling there. In examples, the spar is a first spar and the framework further comprises a second spar which extends parallel to the leading edge or the trailing edge, the auxiliary stringer extending alongside the second spar.

Optionally, the auxiliary stringer is curved or comprises multiple portions angled with respect to one another such that the auxiliary stringer is non-linear. The auxiliary stringer being non-linear means the auxiliary stringer can more accurately conform to the tracked edge where, for example, the tracked edge is also non-linear. Additionally, the auxiliary stringer, in having such a non-linear form, can be arranged to underlie areas of the skin which are particularly vulnerable to buckling, for example, without being limited to a linear form. The non-linear auxiliary stringer can be provided by a series of straight portions, for example, or may comprise curved portions.

Optionally, the auxiliary stringer extends alongside the tracked edge and the multiple portions are arranged such that the auxiliary stringer conforms to the tracked edge. The tracked edge may have a non-linear profile which may be particularly advantageous for aerodynamic performance, for example. Accordingly, it is straightforward to provide an auxiliary stringer which conforms to the wing's leading edge or the wing's trailing edge and thereby supports the skin close to said edge to suppress buckling.

Optionally, the first stringer is a first principal stringer of a plurality of principal stringers, each principal stringer extending along a respective length in the direction of the wing length and extending non-parallel to the auxiliary stringer, a respective proximal end of each principal stringer being nearer the root end and a respective distal end of each principal stringer being nearer the tip end, the respective distal end of each principal stringer proximal to a respective portion of the auxiliary stringer. The principal stringers can be considered to form the usual layout of stringers adopted in typical aircraft wings. The skin at the distal end of the principal stringers can be particularly prone to buckling. The auxiliary stringer can suppress buckling by improving support for the skin near the distal end of the principal stringers, and may allow for the transfer of loads throughout the framework to help equalise loads through the framework and further suppress buckling.

Optionally the distal end of each principal stringer is connected to the respective portion of the auxiliary stringer at a respective joint. This can further improve load distribution within the framework as the plurality of principal stringers are effectively connected at their distal end by the auxiliary stringer, which can suppress buckling.

Optionally, the collection of principal stringers extend substantially parallel to one another. The principal stringers being parallel to one another means they can provide a relatively uniform support for the majority of the aircraft wing. The auxiliary stringer can supplement the principal stringers by supporting the skin around the distal ends of the principal stringers, supporting vulnerable spots of the skin which might arise from the layout of principal stringers.

A second aspect of the present invention provides a stringer for supporting the skin of an aircraft wing, the stringer comprising a main stem arranged along a length of the aircraft wing, extending from a distal end being nearer a wing tip end of the wing to a proximal end nearer a root end of the wing, and at least a first branching portion emanating from the main stem at a first position and extending at an angle from the main stem towards the root end of the wing.

Advantages of the first aspect are applicable in relation to the second aspect, where appropriate.

The stringer, in comprising a branching portion, may thereby be able to support and distribute loads through a wider surface area than two parallel stringers, for example, as parallel stringers are effectively decoupled from one another. In being able to more effectively distribute loads, the stringer can enable a wing comprising such a stringer to have a lighter weight for a given threshold load rating, for example, or can improve the overall load sustainable by the wing, relative to a wing without such a stringer.

Optionally, the main stem is arranged along a leading or trailing edge of the aircraft wing. The leading or trailing edge may ordinarily have weaker load-bearing capabilities, which the branching stringer is able to strengthen as described above. The branching portions may also be more suitable to a wing structure which is tapered in form, such that it has a leading edge and trailing edge which are non-parallel, for example, in that the branching configuration of the stringer can better conform to the tapered structure compared with parallel stringers, for example.

Optionally, the stringer comprises a plurality of branching portions, each branching portion emanating from the main stem at respective positions and extending at respective angles from the main stem towards the root end of the wing. In having a plurality of branching portions, a greater area of the wing can be supported such that load-bearing performance of this area is improved and buckling is suppressed. In some examples the respective angles are different to each other. In other examples, the respective angles are substantially the same as each other.

Optionally, the plurality of branching portions extends substantially parallel to each other and neighbouring branching portions are spaced substantially equidistantly. This can provide relatively uniform support across the wing surface, for example, to reduce the likelihood that any particular area of the wing surface is vulnerable to buckling, for example.

Optionally, the main stem comprise a stack of carbon fibre reinforced polymer plies and each branching portion extends from a ply of the stack of plies. The branching portion can thereby be straightforwardly integrated into the structure of the main stem which can enable effective distributing of load between the main stem and the branching portion, for example. In examples, the ply is oriented such that the direction of the branching portion is parallel with the direction of the ply from which it extends, for example.

A third aspect of the present invention provides an aircraft comprising the aircraft wing of the first aspect or the stringer according to the second aspect.

Advantages of the first aspect and second aspect are applicable in relation to the second aspect, where appropriate. As explained above in relation to the first and second aspect, a higher load on the aircraft wing can be tolerated. This can in turn allow for a reduction in weight of the aircraft wing whilst being able to tolerate a threshold load, for example, which can improve the overall weight of the aircraft. This can improve aerodynamic performance and fuel efficiency, for example.

### BRIEF DESCRIPTION OF THE DRAWINGS

Embodiments of the invention will now be described, by way of example only, with reference to the accompanying drawings, in which:
Figure 1 shows a schematic view of an aircraft wing according to an embodiment of the present invention.
Figures 2a,b show schematic views of a stringer according to an embodiment of the present invention.
Figure 3 shows a schematic cross-sectional view of stringers according to an embodiment of the present invention.
Figure 4 shows a schematic view of an aircraft wing according to an embodiment of the present invention.
Figure 5 shows a schematic view of an aircraft comprising an aircraft wing and a stringer according to an embodiment of the present invention.

### DETAILED DESCRIPTION

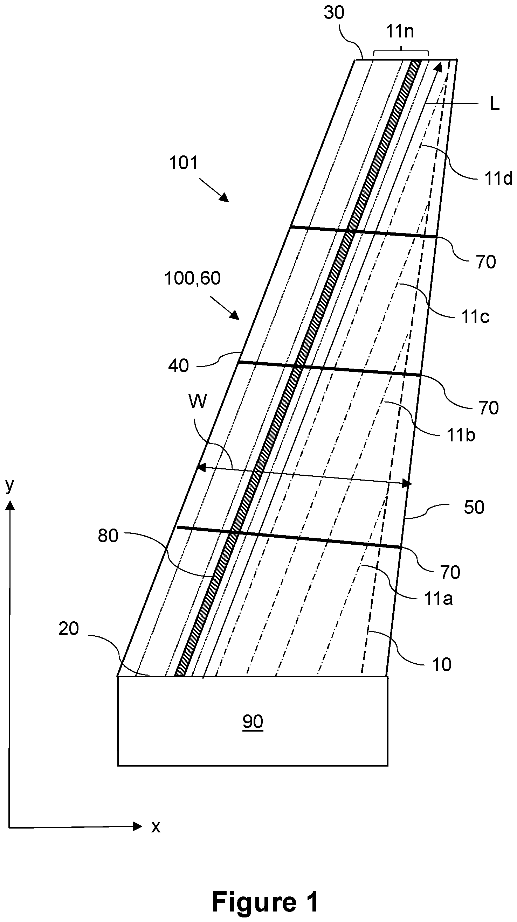

Figure 1 illustrates schematically in plan view an aircraft wing 101 according to some embodiments. The aircraft wing 101 comprises a skin 60 supported by a framework 100. The framework 100 comprises a spar 80, a plurality of ribs 70, and a plurality of stringers 10, 11a-d, 11n (generally designated 11). The plurality of stringers 10, 11a-d, 11n includes an auxiliary stringer 10 which supports a set of principal stringers 11a-d. In general, the framework 100 defines an overall shape of the aircraft wing 101 and supports the skin 60 of the wing 101 such that the skin 60 remains smooth and produces suitable aerodynamic forces required for flight. The constituent components of the framework 100 will now be described in more detail.

The spar 80 extends along a length of the wing 101, generally in the direction indicated by axis y, extending from a root end 20 located nearest a fuselage 90 of the aircraft, to a tip end 30 located furthest from the fuselage 90. The plurality of ribs 70 extend chordwise between a leading edge 40 of the wing 101 and a trailing edge 50 of the wing 101, generally in the direction indicated by axis x. The length of the wing is represented by indicative arrow L and a chordwise width by indicative arrow W. The plurality of ribs 70 are spaced out along the length of the wing and each intersect the spar 80. In some embodiments, there may be additional spars 80. In Figure 1, only three ribs 70 are depicted, but there may be more, such as thirty. The precise characteristics of the spar(s) 80 and ribs 70, such as material composition or structural cross-section, can vary between embodiments, and are generally immaterial to the present invention unless specified otherwise.

In general, the spar 80 and ribs 70 define an overall wing profile. In the example of Figure 1, the leading edge 40 of the wing is generally parallel to the spar 80, but is non-parallel with the trailing edge 50 of the wing. The leading edge 40 of the wing being non-parallel with the trailing edge 50 of the wing means the wing can be considered to have a tapered profile, or shape, in that the chordwise width W of the wing 101 decreases along the length L of the wing 101. That is, the wing 101 has a lower chordwise width near the tip end 30 than at the root end 20.

The plurality of stringers 11 extend generally along the length of the wing 101 from respective proximal ends nearer the root end 20 to respective distal ends nearer the tip end 30. The plurality of stringers 11 therefore extend in the direction of the spar 80 and intersect the ribs 70. In some examples, the stringers are coupled to the ribs 70 whilst in other examples the stringers are separate from the ribs 70, such as by passing through apertures in the ribs 70. The stringers 11 are disposed at an external periphery of the framework 100 and are attached to the skin 60.

The stringers 11 are generally for transferring aerodynamic loads imparted on the skin 60 of the wing 101 during flight into the framework 100 such as into the ribs 70 and spar 80, and to provide stiffness in the skin 60 to resist such aerodynamic loads. Specifically, stringers reinforce the skin 60 against buckling failure modes which might arise from loads created within the structure during operation of the aircraft. It will be appreciated that, as used herein, "buckling" can refer to numerous types of buckling mode which may result from loads present in the wing and wing skin.

A first set of stringers 11n extend from the root end 20 to the tip end 30 in a direction generally parallel to the spar 80 and leading edge 40. The first set of stringers 11n represents a typical configuration of stringers which might be provided in previously known aircraft wings. The first set of stringers 11n are included here to provide context, but are not necessarily present in every embodiment, as other embodiments may only comprise the principal stringers and auxiliary stringer described hereafter.

A second set of stringers 11a-d, labelled here as "principal" stringers for convenience of reference, extend from respective proximal ends near the root end 20 to respective distal ends nearer the tip end 30. Relative to the principal stringers, the first set of stringers 11n are located towards the leading edge 40 of the wing. The principal stringers are, accordingly, located nearer the trailing edge 50 of the wing, relative to the first set of stringers 11n. As described previously, the aircraft wing has a tapered profile and the trailing edge 50 runs non-parallel with the stringers 11. As a result, the trailing edge 50 intersects the would-be path of the principal stringers 11a-d and the respective distal ends of the principal stringers 11a-d are located near the trailing edge. The principal stringers 11a-d do not, therefore, extend as far along the length L of the wing 101 as the first set of stringers 11n.

The auxiliary stringer 10 extends non-parallel to the principal stringers 11a-d, and instead extends generally parallel to the trailing edge 50 of the wing, and runs nearest to the trailing edge 50 of the wing. That is, it can be considered to be the rearmost stringer of the plurality of stringers 11, given its proximal position to the trailing edge 50 of the wing. The auxiliary stringer 10, in this example, extends from the root end 20 to the tip end 30, but, as will be described later, may in other examples only span a portion of the wing length L. The auxiliary stringer 10 is positioned to be proximate to the respective distal ends of the principal stringers 11a-d, in that, in general, the auxiliary stringer 10 is either touching or nearly touching the principal stringers 11a-d.

In this example, the auxiliary stringer 10 and principal stringers 11a-d are connected at the respective distal ends of the principal stringers 11a-d, and can be considered to form a single connected structural component. The configuration of the auxiliary stringer 10 and principal stringers 11a-d is now described in more detail.

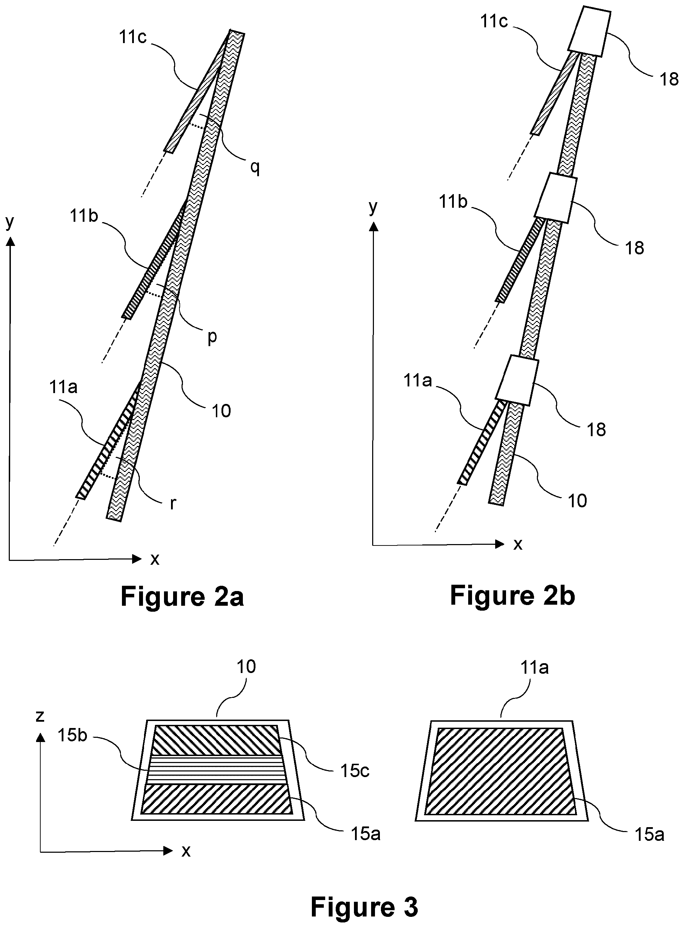

Figures 2a, 2b illustrate the auxiliary stringer 10 and distal portions of the principal stringers 11a-c of Figure 1 in isolation from the other components of the wing. Principal stringer 11d is not illustrated here but the following description is equally applicable.

In this example, the principal stringers 11a-c are connected to the auxiliary stringer 10 at their distal ends at respective joints. Figure 3 illustrates a specific embodiment which realises this, but in general this can achieved by a variety of means, such as fasteners, adhesion, or welding, for example, between the principal stringers and the auxiliary stringer. Forces transmitted through the principal stringers 11a-c can thereby be coupled to the auxiliary stringer 10, and vice versa.

The principal stringers 11a-c are oriented in relation to the auxiliary stringer 10 at respective angles, as can be seen in Figure 2a. That is, a first principal stringer 11a is aligned with the auxiliary stringer 10 at an angle r, as considered in the plane of the wing length L and chordwise width W (or indicative axis *x, y*). Similarly, a second principal stringer 11b is aligned with the auxiliary stringer 10 at an angle p and a third principal stringer 11c is aligned with the auxiliary stringer at an angle q. The precise values for these angles will be based on the relative spacings of the stringers and the precise profile of the aircraft wing, such as how tapered the wing is. In the example of Figure 1 and 2a, each principal stringer 11a-c joins the auxiliary stringer 10 at the same angle, within fabrication tolerances, but in other embodiments, some of which are described later, each principal stringer may join the auxiliary stringer at a different angle, for example.

Capping elements 18 are provided to at least partially house a portion of a respective stringer and the auxiliary stringer at the distal end of the principal stringer. This can protect and reinforce the joint between the respective stringer and the auxiliary stringer.

Figure 3 illustrates cross-sectional views of the auxiliary stringer 10 (left) and the principal stringer 11a (right) according to an embodiment, the cross-section taken in a plane perpendicular to their longitudinal dimension which is generally in the direction of wing length L. In this embodiment, the auxiliary stringer 10 is formed from a stack of carbon fibre reinforced polymer plies 15a-c which, in this example, are stacked vertically. That is, the auxiliary stringer 10 is formed from a first carbon fibre reinforced polymer ply 15a, a second carbon fibre reinforced polymer ply 15b which is disposed upon the first ply 15a, and a third carbon fibre reinforced polymer ply 15c which is disposed upon the second ply 15b. The first principal stringer 11a is formed from the first carbon fibre reinforced polymer ply 15a. Similarly, the second principal stringer 11b can be formed from the second carbon fibre reinforced polymer ply 15b and the third principal stringer 11c can be formed from the third carbon fibre reinforced polymer ply 15c. In such a manner, each principal stringer can be formed from a ply of the stack of plies which form the auxiliary stringer 10. This can improve the coupling of forces between the principal stringers 11a-d and the auxiliary stringer 10.

Whilst a particular cross-section of a stringer is illustrated in Figure 3, the skilled person will appreciate that several types of stringer exist, based on their cross-section perpendicular to their longitudinal axis. In general, stringers may comprise a crown connected to feet by webs, and a cross-sectional type based on the shape of these components. For example, stringers described herein may be "L"/ "angle" -type, "C"/ "channel" -type, "Z"-type, "T" / "blade" -type, "I"-type, "J"-type, or "Omega" / "hat" - type stringers. The auxiliary stringer may be connected to principal stringers by fastening, welding, or adhesion of constituent parts of the stringers, for example. Unless specified otherwise, it is anticipated that any known cross-sectional type of stringer is suitable for use with the present invention. At the joint sections, for example, the cross-section of the stringers may be selected to allow for more secure connection of the auxiliary stringer to the principal stringers, whereas outside the joint sections, for example, a cross-section with more favourable load-bearing properties may be used.

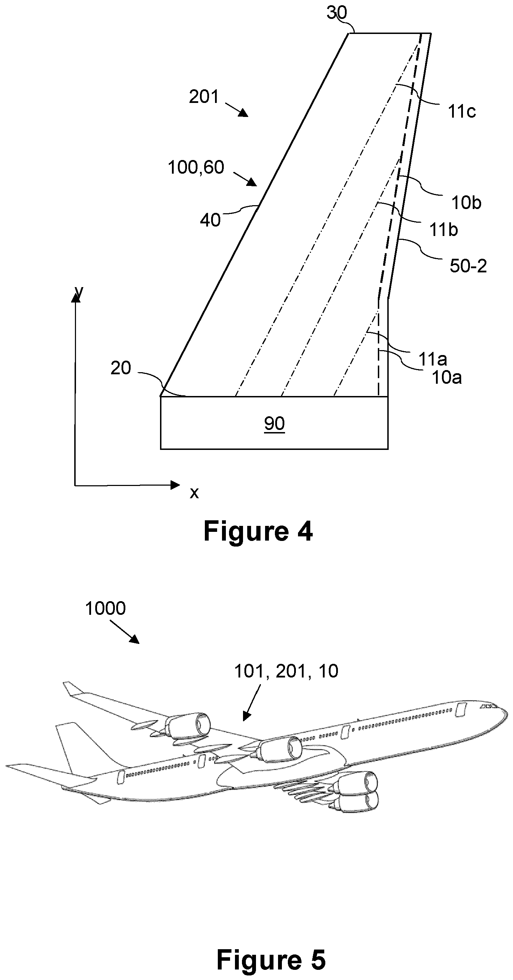

Figure 4 illustrates an aircraft wing 201 according to an embodiment. Features described for the aircraft wing 101 of Figure 1 are applicable here also, unless specified otherwise. Differences between the aircraft wing 201 and the aircraft wing 101 will hereafter be described.

In the example of Figure 1, the auxiliary stringer 10 is linear, in that it extends in a single, continuous direction from root end 20 to tip end 30 of the wing 101. The trailing edge 50-2 of the wing 101 similarly extends in a substantially linear fashion. In the example of Figure 4, the auxiliary stringer is non-linear in that it features a first portion 10a and a second portion 10b, wherein the first portion 10a is angled with respect to the second portion 10b. This allows the auxiliary stringer 10 to better conform to the shape of trailing edge 50-2 of the wing 201, which also has a non-linear profile.

As a result of comprising multiple portions which are angled with respect to one another, the first principal stringer 1 1a joins the first portion 10a of the auxiliary stringer at a different angle to the angle at which the second principal stringer 1 1b joins the second portion 10b of the auxiliary stringer. Different joining techniques may be used based on the angle at which the principal stringer joins the auxiliary stringer, for example.

In other examples, the distal ends of each neighbouring pair of principal stringers may be connected by a respective portion of the auxiliary stringer 10. That is, in some embodiments the first principal stringer 11a and second principal stringer 11b are connected by a first portion of the auxiliary stringer 10, the second principal stringer 1 1b and the third principal stringer 11c are connected by a second portion of the auxiliary stringer 10, the third principal stringer 11c and the fourth principal stringer 11d are connected by a third portion of the auxiliary stringer 10, and so on. Each portion of the auxiliary stringer 10 can be at an angle relative to at least another portion of the auxiliary stringer 10, which can improve the degree to which the auxiliary stringer 10 conforms with the trailing edge 50. Conforming with the leading edge can improve support of the skin at the peripheries of the wing, which can suppress buckling.

The above embodiments are to be understood as an illustrative example of the invention. Further embodiments of the invention are envisaged:

In the above examples, the auxiliary stringer extends alongside the trailing edge of the wing. However, it will be appreciated that the auxiliary stringer could instead be positioned alongside a leading edge of the wing, and in general that the auxiliary stringer tracks either the leading edge or the trailing edge by extending alongside it. Load-bearing capabilities of the wing skin can be lower at these locations due to termination of the principal stringers of the wing, and so the auxiliary stringer is able to provide support, improving the load-bearing capabilities and suppressing buckling in these areas.

In the above examples, the auxiliary stringer extends substantially entirely from the root end to the tip end of the wing. In other examples, the auxiliary stringer may start at a position which is midway between the root end and the tip end, such as a quarter of the way along the wing length, or halfway along the wing length, or three quarters of the way along the wing length, and extend to a position nearer the tip end. In this way, the auxiliary stringer may be confined to an area of the wing skin which is particularly vulnerable to buckling, but not provided elsewhere so as to save weight, for example.

For example, in the above embodiments, the auxiliary stringer is physically coupled to the principal stringers. However, in other embodiments, support of the skin may still be realised by passing the auxiliary stringer proximal to the distal ends of the principal stringers without necessarily having the auxiliary stringer physically coupled to the principal stringers. Support from the auxiliary stringer can be thought of in terms of increasing the number density of stringers per surface area of the skin, and the auxiliary stringer is provided in areas which typically have a lower number density due to termination of the principal stringers.

In some embodiments, the principal stringers and the auxiliary stringer could be provided as a single monolithic structure. Such a monolithic structure could be considered to have a main stem which corresponded to the auxiliary stringer, forming a backbone from which branching portions, or the principal stringers, emanate at angle across the aircraft wing. By producing the structure monolithically, the support enhancement to the skin could be improved as forces are readily coupled through the structure.

In some embodiments, a first auxiliary stringer comprising a first branching principal stringer, or a first plurality of branching stringers, may be arranged nearer the leading edge, whilst a second auxiliary stringer comprising a second branching principal stringer, or second plurality of branching principal stringers, is arranged nearer the trailing edge. Optionally, a plurality of typical stringers may extend along the length of the wing between the first and second auxiliary stringer. In this way, both the leading and trailing edges are reinforced.

Figure 5 schematically illustrates an aircraft 1000 equipped with the wing 101, 201, or stringer 10 according to the invention. Because the wing 101, 201 is strengthened by the provision of the auxiliary stringer 10, the wing can be made more lightweight whilst still achieving a requisite strength necessary to meet regulatory load requirements, for example. This can in turn reduce the weight of the aircraft 1000 which can improve aerodynamic performance or fuel efficiency, for example. Similarly, the wing 101, 201 is strengthened by the provision of the auxiliary stringer 10, which can in turn improve the reliability of the aircraft 1000 and improve an operational lifespan of the aircraft 1000.

It is to be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

## Claims

1. An aircraft wing comprising:
a skin; and
a framework for supporting the skin, the framework comprising:
a spar extending along a length of the wing, the wing length extending between a root end and a tip end of the wing;
a plurality of ribs extending chordwise between a leading edge of the wing and a trailing edge of the wing; and
a plurality of stringers attached to the skin;
wherein the plurality of stringers comprises
a plurality of principal stringers, each principal stringer extending along a respective length in the direction of the wing length, a respective proximal end of each principal stringer arranged nearer the root end and a respective distal end of each principal stringer arranged nearer the tip end, and
an auxiliary stringer extending non-parallel with each principal stringer and arranged such that the respective distal end of each principal stringer is connected to a respective portion of the auxiliary stringer at a respective joint.

2. The aircraft wing of claim 1, wherein the auxiliary stringer comprises a stack of carbon fibre reinforced polymer plies, and at least one principal stringer is formed from a first ply of the stack of plies.

3. The aircraft wing of claim 1 or 2 further comprising a capping element configured to at least partially house a portion of at least one principal stringer, the auxiliary stringer, and the j oint.

4. The aircraft wing according to any previous claim, wherein the trailing edge of the wing is non-parallel with the leading edge of the wing.

5. The aircraft wing according to claim 4, wherein the auxiliary stringer extends alongside a tracked edge, the tracked edge being the trailing edge of the wing or the leading edge of the wing.

6. The aircraft wing according to any previous claim, wherein the auxiliary stringer comprises multiple portions angled with respect to one another such that the auxiliary stringer is non-linear.

7. The aircraft wing according to claim 6, wherein the auxiliary stringer extends in a curved path along the length of the wing.

8. The aircraft wing according to claim 6 or 7 when dependent on claim 5, wherein the multiple portions are arranged such that the auxiliary stringer conforms to the tracked edge.

9. The aircraft wing according to any previous claim, wherein the collection of principal stringers extend substantially parallel to one another.

10. A stringer for supporting the skin of an aircraft wing, the stringer comprising
a main stem arranged along a length of the aircraft wing, extending from a distal end being nearer a wing tip end of the wing to a proximal end nearer a root end of the wing, and
a plurality of branching portions, each branching portion connected to and emanating from the main stem at a respective position and extending at a respective angle from the main stem towards the root end of the wing.

11. The stringer of claim 10, wherein the main stem is arranged along a leading or trailing edge of the aircraft wing.

12. The stringer of claim 10 or 11, wherein the plurality of branching portions extend substantially parallel to each other and neighbouring branching portions are spaced substantially equidistantly.

13. The stringer of any one of claims 10 to 12, wherein the main stem comprises a stack of carbon fibre reinforced polymer plies and each branching portion extends from a respective ply of the stack of plies.

14. An aircraft comprising the aircraft wing according to any one of claim 1 to 9 or the stringer according to any one of claim 10 to 13.
